# EUROPÄISCHE PATENTSCHRIFT

(11) **EP 3 245 591 B1**
(45) Veröffentlichungstag und Bekanntmachung des Hinweises auf die Patenterteilung: **21.11.2018**
(21) Anmeldenummer: 16708372.4
(22) Anmeldetag: 22.02.2016
(51) Int. Cl.: G06F 11/16, G06F 11/14

(54) **SICHERHEITSRELEVANTES COMPUTERSYSTEM**
FAILSAFE COMPUTERSYSTEM
SYSTEME ORDINATEUR SECURISÉ

(30) Priorität: 11.03.2015 DE 102015204337
(43) Veröffentlichungstag der Anmeldung: 22.11.2017
(73) Patentinhaber: Siemens Mobility GmbH, 81739 München (DE)
(72) Erfinder: HARSCH, Waldemar, 30519 Hannover (DE)
(86) Internationale Anmeldenummer: PCT/EP2016/053647
(87) Internationale Veröffentlichungsnummer: WO 2016/142159

(56) Entgegenhaltungen:
- DE-A1-102007 032 805
- DE-A1-102008 043 374
- DE-A1-102011 053 580
- FR-A1- 2 992 749

## Beschreibung

Die Erfindung gemäß Patentanspruch 1 betrifft ein sicherheitsrelevantes Computersystem, insbesondere Eisenbahnsicherungssystem, mit mindestens zwei Hardware-Kanälen, wobei Speicherprüfergebnisse der Kanäle mindestens einem Vergleicher zugeführt sind, der bei Ungleichheit der Speicherprüfergebnisse eine Fehlerreaktion auslöst.

Die nachfolgende Beschreibung bezieht sich im Wesentlichen auf Eisenbahnsicherungssysteme, ohne dass die Erfindung auf diese spezielle Anwendung beschränkt ist. Vielmehr kann die Erfindung bei verschiedensten sicherheitsrelevanten Computersystemen, beispielsweise für industrielle Fertigungsprozesse oder Fahrzeuge aller Art, eingesetzt werden.

Eisenbahnsicherungssysteme müssen sehr hohen sicherheitstechnischen Anforderungen genügen, wobei zunehmend die höchste Sicherheitsstufe SIL4 vorgegeben ist. Die Sicherheitsstufen sind in der CENELEC-Norm EN50129 von SIL0 - signaltechnisch nicht sicher - bis SIL4 - signaltechnisch hochgradig sicher - definiert. Unter sicherheitsrelevantes Computersystem sind hier auch Teilsysteme subsummiert, deren Fehlerverhalten separat betrachtet werden kann. Beispielsweise kann die Ansteuerung eines einzelnen Lichtsignals an einer Eisenbahnstrecke ein sicherheitsrelevantes System darstellen.

Zum Sicherheitskonzept von Computersystemen gehört nach der Norm CENELEC EN50128 neben der Mehrkanaligkeit der Hardware auch eine Speicherprüfung, wobei entweder der Speicherinhalt direkt, d.h. der relevante Code- und Data-Bereich, inklusive Stack, oder darüber gebildete Prüfsummen, die Speicherprüfergebnisse der einzelnen Kanäle bilden, welche verglichen werden und bei Ungleichheit eine Fehlerreaktion auslösen. Die Vergleichbarkeit der Speicherprüfergebnisse setzt voraus, dass auf allen Kanälen die gleiche Software läuft. Um sicherzustellen, dass tatsächlich Softwaregleichheit besteht, müssen die entsprechenden Compiler der einzelnen Kanäle validiert werden. Die Validierung eines neuen Compilers ist extrem zeit- und kostenaufwändig. Hinzu kommen jährliche Pflegekosten während des Innovationszykluses für neue Compiler. Der Einsatz diversitärer Compiler ist bisher nicht möglich, da diversitäre Compiler unterschiedliche Speicherlayouts erzeugen, so dass Speicherprüfergebnisse der Kanäle nicht miteinander vergleichbar sind.

Dokument D1 = DE 10 2011 053 580 A1 offenbart einen Rechner und eine Funktionsarchitektur wonach Eingangswerte parallel einem Steuerpfad, welcher einzelne Software-Funktionsmodule beinhaltet, und einem Überwachungspfad, der entsprechend diversitär strukturiert ist, zugeführt werden. Der Überwachungspfad implementiert ein entsprechend zum originären SW-Funktionsmodul diversitäres SW-Funktionsmodul, wobei ein vom Steuerpfad verschiedener Algorithmus verwendet wird. Mittels eines in Hardware abgebildeten Kernvergleichers werden auf Prozessorebene granulare Berechnungsunterschiede beider Kerne verglichen. Wird ein Unterschied mittels des Kernvergleichers festgestellt, erfolgt eine Systemabschaltung des Gesamtsystems.

Der Erfindung liegt demgemäß die Aufgabe zugrunde, ein sicherheitsrelevantes Computersystem gattungsgemäßer Art einzugeben, das die Verwendung diversitärer Compiler ermöglicht.

Erfindungsgemäß wird die Aufgabe dadurch gelöst, dass jeder Kanal mindestens zwei durch Compiler erstellte diversitäre Software-Programme aufweist, deren Speicherprüfergebnisse dem Vergleicher zugeführt sind, wobei die Speicherprüfergebnisse des ersten Software-Programms des ersten und des zweiten Kanals miteinander verglichen werden und die Speicherprüfergebnisse des zweiten Software-Programms des ersten und des zweiten Kanals miteinander vergleichen werden.

Auf diese Weise ergeben sich vergleichbare Speicherprüfergebnisse auf den mindestens zwei Kanälen des sicherheitsrelevanten Computersystems auch bei der Verwendung von durch mindestens zwei Compilern erstellten diversitären Software-Programmen. Die Validierungszeiten und -kosten zur Sicherstellung, dass die Software-Programme der Compiler absolut identisch sind, entfallen. Bei einem zweikanaligen System sind beispielsweise zwei von diversitären Compilern erstellte Software-Programme vorgesehen, deren Speicherprüfergebnisse quasi über Kreuz miteinander verglichen werden. Dabei werden die Speicherprüfergebnisse des ersten Software-Programms, das auf dem ersten Kanal läuft, mit den Speicherprüfergebnissen des ersten Software-Programms, das auf dem zweiten Kanal läuft, verglichen und die Speicherprüfergebnisse des zweiten Software-Programms, das auf dem ersten Kanal läuft, werden mit den Speicherprüfergebnissen des zweiten Software-Programms, das auf dem zweiten Kanal läuft, verglichen.

Gemäß Anspruch 2 ist vorgesehen, dass jeder Kanal und jedes Software-Programm genau ein gemeinsames Ausgabemodul aufweisen, wobei die Ausgabemodule aller Kanäle mit einem Ausgabevergleicher verbunden sind. Das bedeutet, dass der erste Kanal nur die von dem ersten Compiler übersetzten Daten ausgibt und der zweite Kanal nur die mit dem zweiten Compiler übersetzten Daten ausgibt. Die auf dem ersten Kanal von dem zweiten Compiler übersetzten Daten und die auf dem zweiten Kanal von dem ersten Compiler übersetzten Daten sind mit keinem Ausgabemodul verbunden. Stattdessen werden diese Daten mit einer Dummy-Funktion unterdrückt, so dass sichergestellt ist, dass mit einem einzigen Kanal keine Ausgabe generiert werden kann, die als signaltechnisch sicher interpretiert werden könnte. Die Ausgabemodule ihrerseits müssen nicht separat geprüft werden, da diese Module nur Ausgabefunktion haben und keine sicherheitsrelevanten Daten erzeugen, deren Verfälschung sich gefährlich auswirken könnte.

Die Erfindung wird nachfolgend anhand eines figürlich dargestellten Ausführungsbeispiels näher erläutert.

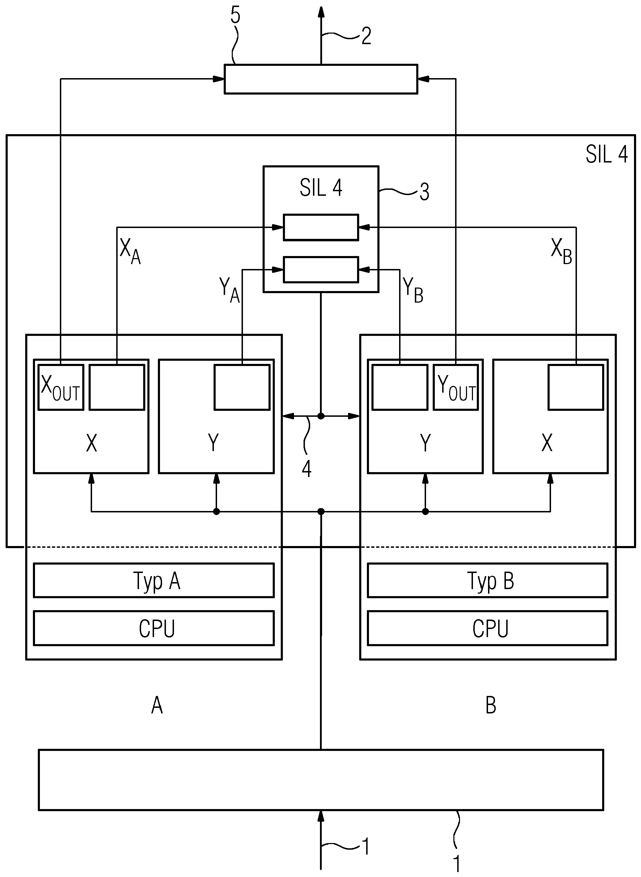

Die Figur zeigt schematisch die wichtigsten Komponenten eines sicherheitsrelevanten Computersystems.

Dargestellt ist ein Computersystem mit zwei Kanälen A und B, welche jeweils eine Central Processing Unit CPU und ein Betriebssystem Typ A beziehungsweise Typ B aufweisen. Beide Kanäle A und B verarbeiten die gleichen Eingabedaten 1 und kompilieren diese bei fehlerfreier Datenverarbeitung in identische Ausgabedaten 2. Bei den Eingabedaten 1 kann es sich beispielsweise um den Elementzustand von Feldelementen, wie Weichen, Signalen, Bahnübergängen usw. einer Eisenbahnsicherungsanlage handeln, welche in den beiden Kanälen A und B in Ausgabedaten 2 zur Anzeige der Elementzustände auf einem Monitor mit signaltechnischer Sicherheit, d.h. SIL4, kompiliert werden. Dazu ist jeder Kanal A und B mit diversitären Software-Programmen, die von einem Compiler X und einem zweiten Compiler Y erstellt werden, ausgestattet. Die Compiler X und Y erzeugen in beiden Kanälen A und B Speicherprüfergebnisse X_{A}, Y_{A} und Y_{B}, X_{B}. Die Speicherprüfergebnisse X_{A}, Y_{A}, Y_{B} und X_{B}, beispielsweise Prüfsummen, sind einem SIL4-Vergleicher 3 zugeführt. Dieser führt einen Vergleich der Speicherprüfergebnisse X_{A} und X_{B} bezüglich des ersten Software-Programms vom Compiler X und einen Vergleich der Speicherprüfergebnisse Y_{A} und Y_{B} bezüglich des zweiten Software-Programms vom Compiler Y durch. Bei Ungleichheit der Speicherprüfergebnisse X_{A} und X_{B} bezüglich des ersten, vom Compiler X erstellten Software-Programms und/oder der Speicherprüfergebnisse Y_{A} und Y_{B} bezüglich des zweiten, vom Compiler Y erstellten Software-Programms liegt ein Datenverarbeitungsfehler auf dem ersten Kanal A und/oder dem zweiten Kanal B vor, so dass der Vergleicher 3 durch Rückwirkung auf die beiden Kanäle A und B eine Fehlerreaktion 4, vorzugsweise eine signaltechnisch sichere Abschaltung, des sicherheitsrelevanten Computersystems bewirkt. Stellt der Vergleicher 3 eine fehlerfreie Datenverarbeitung auf den beiden Kanälen A und B fest, erzeugen ein Ausgabemodul X_{OUT} des ersten, mittels des Compilers X erzeugten Software-Programms des ersten Kanals A und ein Ausgabemodul Y_{OUT} des zweiten, mittels des Compilers Y erzeugten Software-Programms des zweiten Kanals B jeweils Ausgaben, die einem Ausgabevergleicher 5 zugeführt sind und bei Übereinstimmung die Ausgabedaten 2 bilden. Die beiden anderen Software-Programme, nämlich das des zweiten Compilers Y auf dem ersten Kanal A und das des ersten Compilers X auf dem zweiten Kanal B, erzeugen keine Ausgabedaten, sondern dienen lediglich der Vergleichbarkeit der Speicherprüfergebnisse Y_{A} und X_{B} mit den von dem jeweils anderen Kanal B und A erzeugten Speicherprüfergebnissen X_{A} und Y_{B}. Auf diese Weise ergibt sich die Möglichkeit, diversitäre Software-Programme auf Compilern X und Y zu verwenden, wodurch eine extrem aufwändige Compiler-Validierung entfallen kann.

## Patentansprüche

1. Sicherheitsrelevantes Computersystem, insbesondere Eisenbahnsicherungssystem, mit mindestens zwei Hardware-Kanälen (A; B), wobei Speicherprüfergebnisse der Kanäle (A; B) mindestens einem Vergleicher (3) zugeführt sind, der bei Ungleichheit der Speicherprüfergebnisse eine Fehlerreaktion (4) auslöst,
**dadurch gekennzeichnet, dass** jeder Kanal (A; B) mindestens zwei durch Compiler (X, Y) erstellte diversitäre Software-Programme aufweist, deren Speicherprüfergebnisse (X_{A}, Y_{A}; X_{B}, Y_{B}) dem Vergleicher (3) zugeführt sind, wobei die Speicherprüfergebnisse (X_{A}; X_{B}) des ersten Software-Programms des ersten und des zweiten Kanals (A; B) miteinander verglichen werden und die Speicherprüfergebnisse (Y_{A}; Y_{B}) des zweiten Software-Programms des ersten und des zweiten Kanals (A; B) miteinander verglichen werden.

2. Sicherheitsrelevantes Computersystem nach Anspruch 1,
**dadurch gekennzeichnet, dass** jeder Kanal (A; B) und jedes Software-Programm genau ein gemeinsames Ausgabemodul (X_{OUT}; Y_{OUT}) aufweisen, wobei die Ausgabemodule (X_{OUT}; Y_{OUT}) aller Kanäle (A; B) mit einem Ausgabevergleicher (5) verbunden sind.

## Claims

1. Safety-relevant computer system, in particular railway safety system, comprising at least two hardware channels (A; B), wherein memory check results of the channels (A; B) are forwarded to at least one comparator (3), which triggers an error response (4) if the memory check results are not equal, **characterised in that**
each channel (A; B) has at least two diverse software programs built by compilers (X; Y), the memory check results (X_{A}, Y_{A};
X_{B}, Y_{B}) of which are forwarded to the comparator (3), wherein the memory check results (X_{A}; X_{B}) of the first software program of the first and the second channel (A; B) are compared with one another and the memory check results (Y_{A}; Y_{B}) of the second software program of the first and the second channel (A; B) are compared with one another.

2. Safety-relevant computer system according to claim 1, **characterised in that**
each channel (A; B) and each software program has precisely one common output module (X_{OUT}; Y_{OUT}), wherein the output modules (X_{OUT}; Y_{OUT}) of all channels (A; B) are connected to an output comparator (5).

## Revendications

1. Système d'ordinateur sécurisé, notamment système de sécurisation de voie ferrée, comprenant au moins deux canaux (A; B) de matériel, dans lequel des résultats de contrôle de mémoire des canaux (A; B) sont envoyés à au moins un comparateur (3), qui, si les résultats de contrôle de mémoire ne sont pas égaux, déclenche une réaction (4) de défaut,
**caractérisé en ce que**
chaque canal (A; B) a au moins deux programmes de logiciel de diversité établis par deux compileurs (X, Y), dont les résultats (X_{A}, y_{A}; X_{B}, Y_{B}) de contrôle de mémoire sont envoyés au comparateur (3), les résultats (X_{A}; X_{B}) de contrôle de mémoire du premier programme de logiciel du premier et du deuxième canal (A; B) sont comparés entre eux et les résultats (Y_{A}; Y_{B}) de contrôle de mémoire du deuxième programme de logiciel du premier et du deuxième canal (A; B) sont comparés entre eux.

2. Système d'ordinateur sécurisé suivant la revendication 1, **caractérisé en ce que**
chaque canal (A; B) et chaque programme de logiciel ont exactement un module (X_{OUT}; Y_{OUT}) de sortie commun, les modules (X_{OUT}; Y_{OUT}) de sortie de tous les canaux (A; B) étant reliés à un comparateur (5) de sortie.
